# EUROPEAN PATENT SPECIFICATION

(11) **EP 3 068 912 B1**
(45) Date of publication and mention of the grant of the patent: **17.04.2019**
(21) Application number: 14805961.1
(22) Date of filing: 14.11.2014
(51) Int. Cl.: C22B 3/26, C22B 3/02, C22B 15/00, C22B 3/00

(54) **METHOD OF RECOVERING COBALT AND COPPER**
VERFAHREN ZUR RÜCKGEWINNUNG VON KOBALT UND KUPFER
PROCÉDÉ DE RÉCUPÉRATION DE COBALT ET DE CUIVRE

(30) Priority: 15.11.2013 FI 20136129
(43) Date of publication of application: 21.09.2016
(73) Proprietor: Outotec (Finland) Oy, 02230 Espoo (FI)
(72) Inventor: LAITALA, Hannu, FI-02700 Kauniainen (FI)
(74) Representative: Seppo Laine Oy
(86) International application number: PCT/FI2014/050863
(87) International publication number: WO 2015/071546

(56) References cited:
- US-A- 3 455 680
- US-A1- 2008 245 734
- US-B1- 6 171 564
- BANZA A N ET AL: "Base metals recovery from copper smelter slag by oxidising leaching and solvent extraction", HYDROMETALLURGY, ELSEVIER SCIENTIFIC PUBLISHING CY. AMSTERDAM, NL, vol. 67, no. 1-3, 1 December 2002 (2002-12-01), pages 63-69, XP004393576, ISSN: 0304-386X, DOI: 10.1016/S0304-386X(02)00138-X

## Description

### FIELD OF THE INVENTION

The present invention relates to a method of recovering cobalt and copper from starting materials comprising the same. More particularly the present invention relates to a method of recovering cobalt and copper by using an extraction agent comprising hydroxyoxime and phosphinic acid.

### BACKGROUND OF THE INVENTION

It is currently known to recover cobalt and copper from ground ore in a process comprising a leaching step, solid-liquid separation step, a high copper extraction step, first and second iron/aluminium precipitation steps, each followed by a solid-liquid separation step, low copper extraction step and finally a cobalt extraction step. However, this process configuration has some disadvantages compared to the present invention. First of all, two separate extraction units are needed for recovering copper, which results in a higher number of process units needed, and thus in higher investment and operation costs of the process. The iron and aluminium contained in the solution are removed in two stages as well, thereby also incurring in a more complex process configuration and higher investment and operation costs. The multiple treatments of residual precipitates, leaching residues and iron/aluminium precipitate increases the amount of water needed in the process as well as increases the number and amount of solvent circulation in the process thereby diluting the main process streams. The circulation loops in the process are also very complex and thereby the operation and controlling of the process is more demanding and requires highly educated engineering and operating personnel.

US Patent Application US 2008/0245734 discloses a process for separating one or more metal ions forming a first group of metal ions such as copper, zinc and ferric ions, from one or more other metal ions forming a second group of metal ions such as cobalt and nickel, comprising: contacting an aqueous solution comprising said first and second groups of metal ions with an organic solution comprising a phosphinic acid and a hydroxyoxime to extract one of said groups of metal ions into the organic phase and separating the organic and aqueous phases. The US Patent Application relates to a new synergistic solvent extraction mixture. The solvent extraction mixture comprises a combination of phosphinic acid and hydroxyoxime synergist. A synergistic solvent extraction step using this mixture effects extraction of a large proportion of the copper, zinc and ferric iron into an organic phase (to the extent that these elements are present), with a large proportion of the cobalt and nickel being rejected to the aqueous phase. The method does not relate to the recovery of copper, as copper is considered as an impurity in the US Patent Application 2008/0245734. Furthermore, in the method of the US Patent Application copper is extracted into the organic phase, i.e. the solution comprising phosphinic acid and hydroxyoxime, whereas the cobalt remains in the aqueous phase.

US Patent US 6171564 B1 relates to a process for the extraction of metals from an ore or concentrate which contains nickel and/or cobalt and other metals.

Banza et al (Hydrometallurgy 67(2002) 63-69) disclose base metals recovery from copper smelter slag by oxidising leaching and solvent extraction.

### BRIEF DESCRIPTION OF THE INVENTION

An object of the present invention is thus to provide a method of recovering copper and cobalt by extracting them as separate products from a solution containing the same. More precisely, an object of the present invention is to provide a method for recovering copper and cobalt from a starting material, such as ore or concentrate containing the same, which process utilizes recovering copper and cobalt from a solution by extraction. The objects of the invention are achieved by a method which is characterized by what is stated in the independent claim. The preferred embodiments of the invention are disclosed in the dependent claims.

The invention is based on the idea of extracting copper and cobalt from a solution containing them, wherein the solution is contacted with an extraction agent comprising hydroxyoxime and phosphinic acid. These two compounds of the extraction agent do not have a cross-effect with each other, thus the extraction of the present invention is not a synergistic extraction. It was surprisingly found out that when the extraction agent comprised hydroxyoxime and phosphinic acid the copper is completely extracted into the hydroxyoxime. Furthermore, it was found out that cobalt was extracted into the phosphinic acid of the extraction agent. Thus, both the metals desired to be recovered are extracted into the organic phase and unwanted substances or metals to be recovered later remain in the aqueous phase in the extraction step. In the method of the present invention the extraction of copper and cobalt is done in one single step, typically by using one device, i.e. no other, separate copper extraction step is needed. A further advantage of the extraction method of the present invention is that all the copper is extracted into the hydroxyoxime of the extraction agent and phosphinic acid of the extraction agent extracts only cobalt. This enables selective stripping of the cobalt contained in the extraction agent into an electrolyte to be routed to cobalt electrowinning and after that the selective stripping of copper contained in the extraction agent into an electrolyte to be routed to copper electrowinning. The cobalt extracted into the extraction agent of the present invention may be stripped from the extraction agent by using a higher pH and after that copper may be stripped from the extraction agent by using a lower pH.

The present invention relates to a method of recovering copper and cobalt from a starting material, such as ore or concentrate, utilizing the extraction described above. The present invention is especially suitable for starting materials wherein the Ni:Co mass ratio is less than 1, i.e. in starting materials, which contain nickel less than cobalt. Typically the method comprises the steps of leaching copper and cobalt from the starting material, optionally removing solids from the leach solution, extracting and recovering the main part of the copper from the solution into a main product stream of copper, precipitating iron and aluminium, as well as some of the copper and cobalt remaining in the solution, separating and optionally recycling the formed precipitate to the leaching step and extracting the remaining cobalt and the remaining second part of copper with the extraction agent comprising hydroxyoxime and phosphinic acid and thereafter stripping cobalt and copper separately from the hydroxyoxime and phosphinic acid phase into respective electrolyte solutions.

A process arrangement for recovering cobalt and copper by utilizing extraction comprises a leaching unit adapted for leaching the starting material in a leach solution to obtain a leach slurry comprising copper, cobalt, iron and aluminium, optionally a first solid-liquid separation unit adapted for separating a solid leach residue from the liquid phase of the leach slurry, thereafter a first extraction unit adapted for extracting a first part of copper from the liquid phase to obtain a main stream of copper and a liquid phase comprising iron, aluminium, cobalt and a second part of copper, a precipitation unit adapted for precipitating from the liquid phase comprising iron, aluminium, cobalt and the second part of copper by contacting with a precipitating agent, typically calcium carbonate and/or calcium hydroxide, iron, aluminium and part of copper and cobalt present in the liquid phase to obtain a slurry comprising a precipitate, a second solid-liquid separation unit adapted for separating the precipitate to obtain solid precipitate and a solution comprising the remaining cobalt and the remaining second part of copper, and optionally recycling equipment for recycling the separated precipitate to the leaching unit a), a second extraction unit adapted for extracting the remaining cobalt and the remaining second part of copper from the solution comprising them, wherein the solution is contacted with an extraction agent comprising hydroxyoxime and phosphinic acid to obtain an aqueous solution and an organic solution, in which organic solution copper is extracted into hydroxyoxime and cobalt is extracted into phosphinic acid, and a stripping unit adapted for stripping cobalt from the organic solution into cobalt electrolyte solution, and a stripping unit adapted for stripping copper from the organic solution into copper electrolyte solution.

An advantage of the method of the invention is that a second, separate copper extraction step is not needed. This is achieved by using extraction agent comprising hydroxyoxime and phosphinic acid, typically in the pH of at least 2, more typically in a pH of at least 3.0 and even more typically in a pH of at least 6.5 or higher and thereby extracting both cobalt and copper in a single step into one organic phase formed by the extracting agents.

A further advantage achieved by the present invention is that it is possible to remove iron and aluminium remaining in the solution after leaching and solid-liquid separation in a single step and thus the number and size of equipment needed for the precipitation is decreased and thereby investment and operating costs of the process are decreased. This is achieved by recycling the formed precipitate comprising iron and aluminium compounds as well as co-precipitated copper and cobalt compounds into the leaching step.

A still further advantage of the present invention is that only one stream of leach residue, i.e. solid waste is led out of the process. The simple and efficient handling of residue solids, leach residue and precipitate comprising iron and aluminium compounds decreases the amount of water needed in the process as well as the amount of water needed to be recycled, because no excess washing and/or diluting is needed.

The method and process arrangement of the present invention result in a simple construction of the plant wherein unnecessary recycling loops can be avoided, and thus the operation of the plant is easier and less expensive.

### BRIEF DESCRIPTION OF THE DRAWINGS

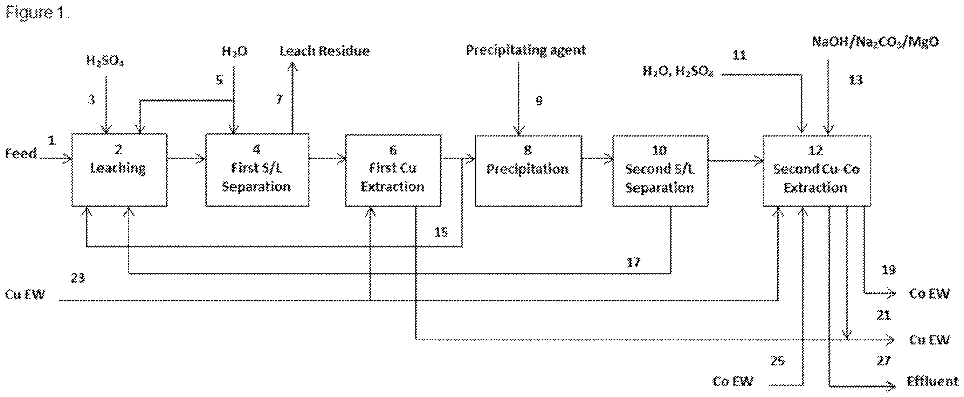

In the following the invention will be described in greater detail by means of preferred embodiments with reference to the attached drawings, in which
Figure 1 is an example embodiment of the process of the present invention.

### DETAILED DESCRIPTION OF THE INVENTION

The present invention relates to a method wherein copper and cobalt are extracted from a solution comprising them, wherein the solution is contacted with an extraction agent comprising hydroxyoxime and phosphinic acid to obtain an organic solution wherein copper is extracted into hydroxyoxime and cobalt is extracted into phosphinic acid. More precisely, the present invention relates to a method for recovering copper and cobalt from a starting material containing them, wherein the method comprises
a) leaching in a leaching step the starting material in a leach solution to obtain a leach slurry comprising copper, cobalt, iron and aluminium,
b) optionally subjecting the leach slurry to a first solid-liquid separation step for separating a solid leach residue from a liquid phase,
c) extracting in a first extraction step a first part of copper from the liquid phase to obtain a main stream of copper and a liquid phase comprising iron, aluminium, cobalt and a second part of copper,
d) contacting in a precipitation step the liquid phase comprising iron, aluminium, cobalt and the second part of copper with precipitating agent, typically calcium carbonate and/or calcium hydroxide, for precipitating iron, aluminium, cobalt and the second part of copper present in the liquid phase to obtain a slurry comprising precipitate,
e) subjecting the slurry comprising the precipitate to a second solid-liquid separation step for separating the precipitate to obtain solid precipitate and a solution comprising the remaining cobalt and the remaining second part of copper, and optionally recycling the separated precipitate to the leaching step a),
f) extracting in a second extraction step the remaining cobalt and the remaining second part of copper from the solution comprising them, wherein the solution is contacted with an extraction agent comprising hydroxyoxime and phosphinic acid to obtain an aqueous solution and an organic solution, in which organic solution copper is extracted into hydroxyoxime and cobalt is extracted into phosphinic acid,
g) stripping cobalt from the organic solution into cobalt electrolyte solution, and
h) stripping copper from the organic solution into copper electrolyte solution.

The starting materials to be fed to the leaching step are typically ground ore and/or concentrate from which it is desired to recover copper and cobalt. Typically the starting material is material comprising compounds selected from the group consisting of oxides, carbonates, sulphates and sulphides of copper and cobalt and any mixtures thereof. Typically in the staring material the Ni:Co mass ratio is less than 1, i.e. the starting materials contain nickel less than cobalt.

The leaching step is performed for leaching copper and cobalt and the leaching is typically an atmospheric leaching performed in oxidizing conditions obtained by using sulphuric acid and oxygen-containing gas. Another option typically used is to perform the leaching in oxidizing and reducing conditions. The reducing conditions are obtained by using any readily available reducing agent, such as SO₂. The leaching step typically comprises at least two leaching stages. Typically the leaching is performed in a plurality of reactors, for example in a series of reactors comprising 2 to 7 reactors. Typically in the first stage of the leaching step the copper is leached under oxidizing conditions by using sulphuric acid. Cobalt is typically leached in a subsequent stage of the leaching step under reducing conditions. Typically also other metals, such as iron and aluminium are leached in the leaching step.

From the leaching step the obtained slurry is typically routed to a first solid-liquid separation, wherein the solid leach residue is separated from the liquid phase. Typically the leach residue comprises iron and aluminium compounds, such as FeOOH, Fe(OH)₃, AIOOH, Al(OH)₃ and/or undissolved residues of Fe and /or Al compounds. In the present method the leach residue may also comprise iron and aluminium compounds due to the optional recycling of the precipitate to the leaching step. Typically the first solid-liquid separation is performed by a settler. The separated leach residue may be washed and landfilled in a landfilling area.

The liquid phase obtained from the first solid-liquid separation is routed to a first extraction step, wherein the liquid phase is contacted with hydroxyoxime for extracting a first part of copper contained in the liquid phase. This copper extraction is performed in a normal manner known in the art for extracting copper. In the first extraction step the main stream of copper to be directed to electrowinning is produced. Typically, main part of the total amount of copper, i.e. 60 - 95%, more typically approximately 90% is extracted in the first extraction step. The copper extracted to the hydroxyoxime in the first extraction step may be stripped to a copper electrolyte solution to be routed to copper electrowinning for recovering copper. Typically 90% of the raffinate, i.e. the liquid phase comprising iron, aluminium, cobalt and a second part of copper obtained from the first copper extraction is recycled back to the leaching step, wherein the acid produced in the extraction is used for the leaching.

The rest, typically approximately 10%, of the raffinate, i.e. the liquid phase comprising iron, aluminium, cobalt and a second part of copper is routed to a precipitation step, wherein the liquid phase is contacted with precipitating agent, typically calcium carbonate and/or calcium hydroxide, to obtain a slurry comprising precipitated iron, aluminium, copper and cobalt compounds. The precipitate is typically a haematite/goetite mixed precipitate. Iron is typically precipitated as Fe(OH)₃, and/or FeOOH. Aluminium is typically precipitated as corresponding aluminium compounds, i.e. Al(OH)₃ and/or AIOOH. The slurry also comprises basic copper and cobalt compounds which co-precipitate with the iron and aluminium compounds. Typically the amount of co-precipitated copper and cobalt compounds is less than 10% of the copper and cobalt contained in the solution. Typically, the copper and cobalt compounds are for example Cu(OH)₂, Co(OH)₂, Cu₂(OH)₂SO₄, CO₂(OH)₂SO₄.

The slurry comprising precipitate comprising iron and aluminium compounds and co-precipitated copper and cobalt compounds is routed to a second solid-liquid separation step for separating the precipitate to obtain solid precipitate comprising iron, aluminium, copper and cobalt compounds and a solution containing the remaining cobalt and the remaining second part of copper.

The precipitate comprising iron and aluminium compounds and co-precipitated copper and cobalt compounds obtained in the precipitation step is recycled to the leaching step, typically to the last reactor of leaching cascade. It has now been surprisingly found out that by recycling the precipitate to the last reactor in the leaching step copper and cobalt contained in the precipitate are leached but iron and aluminium compounds remain in the solid form. As stated above, some of the copper and cobalt are precipitated as basic compounds along with iron and aluminium and when the precipitate is routed to the cobalt leaching the basic cobalt and copper compounds are dissolved and at the same time reacting with the residue acid (H₂SO₄) originating from the copper leaching. This enables an enhanced recovery of cobalt and copper from the starting material and only unwanted materials end up to be landfilled in the leach residue.

The solution obtained from the second solid-liquid separation is subjected to a second extraction step for extracting cobalt and the second part of copper from the solution, wherein the solution is contacted with an extraction agent comprising hydroxyoxime and phosphinic acid to obtain an organic solution wherein copper is extracted into hydroxyoxime and cobalt is extracted into phosphinic acid and to obtain an aqueous phase. The aqueous phase typically comprises the remaining impurity metals, such as Na and Ca. These two compounds, hydroxyoxime and phosphinic acid, of the extraction agent do not have a cross-effect with each other meaning that extraction of copper does not interfere with the extraction of cobalt. It was surprisingly found out that when the extraction agent comprised hydroxyoxime, such as aldoxime or ketoxime or a mixture thereof in the pH of the present method, the second part of copper is completely extracted. Typically the pH of the extraction agent is above 2.0, more typically the pH is above 3.0, even more typically the pH is above 6.5. Examples of typical pH ranges used are for example from 3.0 to 7.5, or even more typically from 6.5 to 7.5. It is also possible to use pH ranges higher than these.

The solution subjected to the second extraction step typically comprises 1 to 10 g/l copper and 0.1 to 10 g/l cobalt. Normally in a cobalt extraction process the copper content is very low (such as <10 mg/l) and the separation of copper is not possible with a phosphine based reagent. With the present invention the copper content of the staring material can be significantly higher and it is still possible to separate from the cobalt with the method of the present invention. Furthermore, it was found out that cobalt was extracted into the phosphinic acid of the extraction agent. In the method of the present invention the extraction of copper and cobalt is done in one single step, typically by using one device, i.e. no other, separate copper extraction step is needed. The fact that the second part of copper is extracted into the hydroxyoxime of the extraction agent and phosphinic acid of the extraction agent extracts only cobalt enables selective stripping of the cobalt contained in the extraction agent into the cobalt electrolyte to be routed to cobalt electrowinning. This enables also the selective stripping of copper into copper electrolyte to be routed to copper electrowinning.

The phosphinic acid has a general formula R₂PO₂H, in which R represents an organic group. The two organic groups R, which may be the same or different, can be selected from optionally substituted branched, straight chained or cyclic alkyl, alkenyl or alkynyl groups. Typically the organic groups are fairly large and have a minimum of 4 carbon atoms, more preferably from 4 to 18 carbon atoms. The organic groups are preferably unsubstituted branched, straight chained or cyclic alkyl groups and may suitably be n-octyl, cyclooctyl, 2-ethylhexyl or 2,4,4-trimethylpentyl.

The term alkyl means straight chain, branched or mono- or polycyclic alkyl, typically C1-C30 alkyl or cycloalkyl. The optionally substituted means that the group may or may not be substituted with one or more groups selected from a group consisting of alkyl, alkenyl, alkynyl, aryl, halo, haloalkyl, haloalkenyl, haloalkynyl, haloaryl, hydroxyl, alkoxy, alkenyloxy, aryloxy, benzyloxy, haloalkoxy, haloalkenyloxy, haloaryloxy, nitro, nitroalkyl, nitroalkenyl, nitroalkynyl, nitroaryl, nitroheterocyclyl, amino, alkylamino, dialkylamino, alkenylamino, alkynylamino, arylamino, diarylamino, benzylamino, dibenzylamino, acyl, alkenylacyl, alkynylacyl, arylacyl, acylamino, diacylamino, acyloxy, alkylsulphnyloxy, arylsulphenyloxy, heterocyclyl, heterocycloxy, heterocyclamino, haloheterocyclyl, alkylsulphenyl, arylsulphenyl, carboalkoxy, carboaryloxy, mercapto, alkylthio, benzylthio, acylthio or a like.Typically the phosphinic acid used in the method is di-2,4,4-trimethylpentyl phosphinic acid (e.g. CYANEX 272). Any phosphinic acid having extraction characteristics similar to those of the di-2,4,4-trimethylpentyl phosphinic acid may also be used.

The hydroxyoxime used may be any suitable commercially available hydroxyoxime. The hydroxyoxime is a compound containing an oxime group and a hydroxyl group. Preferably the hydroxy group is at the α- or β-position, more preferably at the β-position in respect to the oxime group. Typically the hydroxyoxime in the method of the invention is aliphatic or aromatic, preferably aromatic, hydroxyoxime. The hydroxyoxime is suitably an aldoxime or a ketoxime, or a mixture thereof.

Advantageously, the aromatic hydroxyoxime of the present invention has a formula (II) 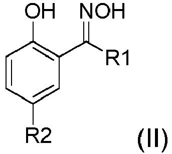 wherein R1 is H or C1-6-alkyl, preferably H or CH₃, and R2 is C7-C15-alkyl.

Examples of suitable aldoximes include aromatic aldoximes such as 5-nonylsalicylaldoxime (e.g. Acorga M5640 or LIX860N), 5-dodecylsalicylaldoxime (e.g. LIX860). Examples of suitable ketoximes include aromatic ketoximes such as 2-hydroxy-5-nonylacetophenone oxime (e.g. LIX84), 1-(5-nonyl-2-hydroxyphenyl)(phenyl)ethan-1-one oxime (e.g. LIX65N), (5-dodecyl-2-hydroxyphenyl)(phenyl)methanone oxime (LIX 65).

According to an embodiment of the invention the extraction agent comprises di-2,4,4-trimethylpentyl phosphinic acid and hydroxyoxime selected from the group consisting of aldoximes, ketoximes, and mixtures thereof.

According to an embodiment of the invention the extraction agent comprises di-2,4,4-trimethylpentyl phosphinic acid and hydroxyoxime selected from the group consisting of aromatic hydroxyoximes of formula (I) 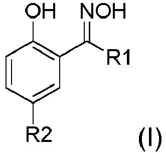 wherein R1 is H, C1-6-alkyl or aryl, preferably H, CH₃ or phenyl, and R2 is C7-C15-alkyl, preferably C9-C12-alkyl.

According to an further embodiment of the invention the extraction agent comprises di-2,4,4-trimethylpentyl phosphinic acid and hydroxyoxime selected from the group consisting of 5-nonylsalicylaldoxime, 5-dodecylsalicylaldoxime, 2-hydroxy-5-nonylacetophenone oxime, 1-(5-nonyl-2-hydroxyphenyl)(phenyl)ethan-1-one oxime and (5-dodecyl-2-hydroxyphenyl)(phenyl)methanone oxime.

The hydroxyoxime and phosphinic acid content of the extraction agent is typically determined on the basis of the copper and cobalt content in the material to be extracted. The extraction of cobalt and copper is typically performed in a pH of at least above 2, more typically in a pH of at least above 3.0 and even more typically in a pH of at least 6.5. According to an embodiment of the invention the pH in the second extraction step is above 6.5. Examples of typical pH ranges used are for example from 3.0 to 7.5, or even more typically from 6.5 to 7.5. It is also possible to use pH ranges higher than these.

The temperature in the extraction method is typically in the range of 20 to 60°C.

By controlling the pH value of the extraction agent and the temperature of the second extraction step in the method it is possible to control the extraction of cobalt and copper into the extraction agent. The pH value of the second extraction step is the mostly used control parameter.

After the second extraction step the cobalt is typically stripped from the organic solution into a cobalt electrolyte solution in a pH in the range of 1.5 - 3.5 The copper is typically stripped from the organic solution into a copper electrolyte solution in a pH below 1. The electrolyte solutions obtained may be further routed to electrowinning processes respectively for copper and cobalt for recovery. The copper electrolyte solution contains typically approximately 40 g/l copper and 160 - 200 g/l sulphuric acid. The cobalt electrolyte comprises typically 50 - 80 g/l cobalt and 5 - 15 g/l of sulphuric acid.

The present invention discloses also a process arrangement for recovering copper and cobalt from a starting material comprising them, which arrangement comprises
a) leaching unit adapted for leaching the starting material in a leach solution to obtain a leach slurry comprising copper, cobalt, iron and aluminium,
b) optionally a first solid-liquid separation unit adapted for separating a solid leach residue from the liquid phase of the leach slurry,
c) a first extraction unit adapted for extracting a first part of copper from the liquid phase to obtain a main stream of copper and a liquid phase comprising iron, aluminium, cobalt and a second part of copper,
d) a precipitation unit adapted for precipitating from the liquid phase comprising iron, aluminium, cobalt and the second part of copper by contacting with a precipitating agent, typically calcium carbonate and/or calcium hydroxide, iron, aluminium and part of copper and cobalt present in the liquid phase to obtain a slurry comprising a precipitate,
e) a second solid-liquid separation unit adapted for separating the precipitate to obtain solid precipitate and a solution comprising the remaining cobalt and the remaining second part of copper, and optionally recycling equipment for recycling the separated precipitate to the leaching unit a),
f) a second extraction unit adapted for extracting the remaining cobalt and the remaining second part of copper from the solution comprising them, wherein the solution is contacted with an extraction agent comprising hydroxyoxime and phosphinic acid to obtain an aqueous solution and an organic solution, in which organic solution copper is extracted into hydroxyoxime and cobalt is extracted into phosphinic acid,
g) a stripping adapted for stripping cobalt from the organic solution into cobalt electrolyte solution, and
h) a stripping unit adapted for stripping copper from the organic solution into copper electrolyte solution.

Typically the process arrangement is adapted for performing the method of the present invention.

Typically the leaching unit comprises a plurality of leaching reactors, more typically 2 to 7 leaching reactors.

Referring to Figure 1, the figure comprises an example embodiment of the present invention wherein the method comprises feeding the starting material 1 into a leaching step 2, which typically comprises at least one leaching stage, more typically at least two leaching stages. Sulphuric acid 3 and water 5 are fed into the leaching step 2 thereby leaching copper, cobalt and other metals, such as Fe and Al from the starting material. In the leaching step 2, a leach slurry comprising copper, cobalt, iron and aluminium is formed. Typically the formed leach slurry is routed to a first solid-liquid separation step 4, into which also water 5 is fed in order to ease the separation of the solid matter from the liquid and for washing the leached valuable metals (Cu, Co) from the leach residue. A solid leach residue 7, comprising mainly undissolved solid matter, precipitated iron and aluminium and typically also gypsum formed in the neutralization, is removed from the first solid-liquid separation step 4 and the liquid phase comprising iron, aluminium, cobalt and copper is routed to a first copper extraction step (6).

In the first extraction step (6) a first part of copper, typically approximately 90% of the total amount of copper, is extracted from the liquid phase to obtain a main product stream of copper and a liquid phase comprising iron, aluminum cobalt and a second part of copper. The main stream of copper is stripped into a copper electrolyte solution 23 and routed further as copper electrolyte solution 21 to copper electrowinning (not shown in the Figure) for recovering copper.

A part, typically approximately 90% of the liquid phase comprising aluminum, iron, cobalt and the second part of copper may be optionally recycled back to the leaching step 2. The rest, or if no recycling is performed all of the liquid phase comprising iron, aluminum, cobalt and the second part of copper is routed to a precipitation step 8, wherein the liquid phase comprising iron, aluminum, cobalt and a second part of copper is contacted with a precipitating agent, typically calcium carbonate, magnesium oxide and/or calcium hydroxide, for precipitating iron and aluminum and to some extent also copper and cobalt present in the liquid phase to obtain a slurry comprising the precipitate.

Typically the precipitate formed in the precipitation step 8 comprises Fe₂O₃ and/or FeOOH, Al₂O₃ and/or AIOOH, Cu(OH)₂ and/or Cu₂(OH)₂SO₄ and Co(OH)₂ and/or Co₂(OH)₂SO₄. After the precipitation step 8 the slurry comprising the precipitate is subjected to a second solid-liquid separation step 10, wherein the precipitate 17 is separated from the slurry thereby obtaining a solution comprising the rest of the cobalt and rest of the second part of copper, which have not precipitated. The solid precipitate 17 is typically recycled back to the leaching step 2, more typically to the last leaching stage wherein cobalt is typically leached, for leaching copper and cobalt compounds contained in the precipitate. Iron and aluminium compounds contained in the precipitate are not leached and they are routed to the first solid-liquid separation as they are and removed with leach residue.

The solution comprising the rest of the remaining cobalt and the rest of the remaining second part of copper is routed from the second solid-liquid separation step 8 to a second extraction step 12, wherein the solution is contacted with an extraction agent comprising hydroxyoxime and phosphinic acid typically 5-nonylsalicylaldoxime and di-2,4,4-trimethylpentyl phosphinic acid, to obtain an aqueous solution and an organic solution, in which organic solution copper is extracted into hydroxyoxime and cobalt is extracted into phosphinic acid. The pH is kept above 6.5. NaOH, Na₂CO₃ and MgO 13 are fed to the second extraction step 12 for controlling the pH. Water and sulphuric acid 11 are used for washing and stripping the extracted components from the extraction agent. After the second extraction step 12 the cobalt is stripped in a cobalt stripping step (not shown in detail in the Figure) from the organic solution into cobalt electrolyte solution and thereafter routed to cobalt electrowinning for cobalt recovery. The pH is typically in the range of 1.5 - 3.5. After the cobalt stripping step the copper is stripped in a copper stripping step (not shown in detail in the Figure) from the organic solution into copper electrolyte solution and thereafter routed to copper electrowinning for copper recovery. The pH is typically in the range of below 1.0.

### EXAMPLES

A feed comprising 3 g/l of copper and 1 g/l of cobalt is provided. Extraction steps are performed so that 100% of the copper is extracted and >99% of the cobalt is extracted. The extraction agent comprises 15% of 5-nonylsalicylaldoxime and 20% of Cyanex 272 (di-2,4,4-trimethylpentyl phosphinic acid). The temperature of the extraction is 50°C and the pH is ranging between 6.5 and 7.5. The charged extraction agent is washed in two steps and stripped selectively in 5 steps. The first 3 stripping steps are for stripping cobalt and the 2 stripping steps for stripping copper.

It will be obvious to a person skilled in the art that, as the technology advances, the inventive concept can be implemented in various ways. The invention and its embodiments are not limited to the examples described above but may vary within the scope of the claims.

## Claims

1. A method of recovering copper and cobalt from a starting material comprising them, wherein the method comprises
a) leaching in a leaching step the starting material in a leach solution to obtain a leach slurry comprising copper, cobalt, iron and aluminium,
b) optionally subjecting the leach slurry to a first solid-liquid separation step for separating a solid leach residue from a liquid phase,
c) extracting in a first extraction step a first part of copper from the liquid phase to obtain a main stream of copper and a liquid phase comprising iron, aluminium, cobalt and a second part of copper,
d) contacting in a precipitation step the liquid phase comprising iron, aluminium, cobalt and the second part of copper with precipitating agent for precipitating iron, aluminium, cobalt and the second part of copper present in the liquid phase to obtain a slurry comprising precipitate,
e) subjecting the slurry comprising the precipitate to a second solid-liquid separation step for separating the precipitate to obtain solid precipitate and a solution comprising the remaining cobalt and the remaining second part of copper, and optionally recycling the separated precipitate to the leaching step a),
f) extracting in a second extraction step the remaining cobalt and the remaining second part of copper from the solution comprising them, wherein the solution is contacted with an extraction agent comprising hydroxyoxime and phosphinic acid to obtain an aqueous solution and an organic solution, in which organic solution copper is extracted into hydroxyoxime and cobalt is extracted into phosphinic acid,
g) stripping cobalt from the organic solution into cobalt electrolyte solution, and
h) stripping copper from the organic solution into copper electrolyte solution.

2. The method according to claim 1, wherein the leaching is performed in oxidizing conditions obtained by using sulphuric acid and oxygen-containing gas.

3. The method according to any one of claims 1 or 2, wherein the leaching is performed in reducing conditions obtained by using a reducing agent, such as SO₂.

4. The method according to any one of the preceding claims, wherein the leaching comprises a plurality of reactors, typically 2 to 7 reactors, and the separated iron and aluminium compounds are recycled to the last reactor.

5. The method according to any one of the preceding claims, wherein extracting the first part of copper from the liquid phase in the first extraction step is performed by hydroxyoxime reagent.

6. The method according to any one of the preceding claims, wherein the second extraction step is performed in a temperature of 20 to 60°C.

7. The method according to any one of the preceding claims wherein the second extraction step is performed in a pH of at least 2.0, typically in a pH of at least 6.5.

8. The method according to any one of the preceding claims, wherein the hydroxyoxime is selected from a group consisting of aldoximes, ketoximes and mixtures thereof.

9. The method according to claim 8, wherein the aldoxime is selected from the group consisting of 5-nonylsalicylaldoxime and 5-dodecylsalicylaldoxime.

10. The method according to claim 8 wherein the ketoxime is selected from the group consisting of 2-hydroxy-5-nonylacetophenone oxime, 1-(5-nonyl-2-hydroxyphenyl)(phenyl)ethan-1-one oxime and (5-dodecyl-2-hydroxyphenyl)(phenyl)methanone oxime.

11. The method according to any one of the preceding claims, wherein the phosphinic acid is selected from compounds having a general formula of R₂PO₂H, wherein R is an organic group.

12. The method according to any one of the preceding claims, wherein the extraction agent comprises di-2,4,4-trimethylpentyl phosphinic acid and hydroxyoxime selected from the group consisting of aldoximes or a ketoximes, or mixtures thereof.

13. The method according to claim 12, wherein the hydroxyoxime is selected from the group consisting of 5-nonylsalicylaldoxime, 5-dodecylsalicylaldoxime, 2-hydroxy-5-nonylacetophenone oxime, 1-(5-nonyl-2-hydroxyphenyl)(phenyl)ethan-1-one oxime and (5-dodecyl-2-hydroxyphenyl)(phenyl)-methanone oxime.

14. The method according to any one of the preceding claims, wherein cobalt is stripped from the organic solution into a cobalt electrolyte solution in a pH in the range of 1.5 - 3.5.

15. The method according to any one of the preceding claims, wherein copper is stripped from the organic solution into a copper electrolyte solution in a pH of less than 1.

## Patentansprüche

1. Verfahren zur Rückgewinnung von Kupfer und Kobalt aus einem dieselben umfassenden Ausgangsmaterial, wobei das Verfahren umfasst
a) Auslaugen des Ausgangsmaterials in einem Auslaugeschritt in einer Auslaugelösung, um eine Auslaugeaufschlämmung zu erhalten, die Kupfer, Kobalt, Eisen und Aluminium umfasst,
b) gegebenenfalls Unterwerfen der Auslaugeaufschlämmung einem ersten Fest-Flüssig-Trennschritt zum Trennen eines festen Auslaugerückstandes von einer flüssigen Phase,
c) Extrahieren eines ersten Teils von Kupfer aus der flüssigen Phase in einem ersten Extraktionsschritt, um einen Hauptstrom von Kupfer und eine flüssige Phase zu erhalten, die Eisen, Aluminium, Kobalt und einen zweiten Teil von Kupfer umfasst,
d) Kontaktieren der flüssigen Phase, die Eisen, Aluminium, Kobalt und den zweiten Teil von Kupfer umfasst, in einem Fällungsschritt mit einem Fällungsmittel zum Ausfällen von Eisen, Aluminium, Kobalt und dem zweiten Teil von Kupfer, das in der flüssigen Phase vorhanden ist, um eine Aufschlämmung zu erhalten, die einen Niederschlag umfasst,
e) Unterwerfen der Aufschlämmung, die den Niederschlag umfasst, einem zweiten Fest-Flüssig-Trennschritt zum Trennen des Niederschlags, um einen festen Niederschlag und eine Lösung, die das verbleibende Kobalt und den verbleibenden zweiten Teil von Kupfer umfasst, zu erhalten, und gegebenenfalls Rückführen des abgetrennten Niederschlags in den Auslaugeschritt a),
f) Extrahieren des verbleibenden Kobalts und des verbleibenden zweiten Teils von Kupfer aus der dieselben umfassenden Lösung in einem zweiten Extraktionsschritt, wobei die Lösung mit einem Hydroxyoxim und Phosphinsäure umfassenden Extraktionsmittel in Kontakt gebracht wird, um eine wässrige Lösung und eine organische Lösung zu erhalten, wobei in der organischen Lösung Kupfer in Hydroxyoxim extrahiert wird und Kobalt in Phosphinsäure extrahiert wird,
g) Abstreifen von Kobalt aus der organischen Lösung in eine KobaltElektrolytlösung und
h) Abstreifen von Kupfer aus der organischen Lösung in eine Kupferelektrolytlösung.

2. Verfahren nach Anspruch 1, wobei das Auslaugen unter oxidierenden Bedingungen durchgeführt wird, die unter Verwendung von Schwefelsäure und sauerstoffhaltigem Gas erhalten werden.

3. Verfahren nach einem der Ansprüche 1 oder 2, wobei das Auslaugen unter reduzierenden Bedingungen durchgeführt wird, die unter Verwendung eines Reduktionsmittels, wie SO₂, erhalten werden.

4. Verfahren nach einem der vorstehenden Ansprüche, wobei die Auslaugung eine Vielzahl von Reaktoren, typischerweise 2 bis 7 Reaktoren, umfasst und die getrennten Eisen- und Aluminiumverbindungen in den letzten Reaktor zurückgeführt werden.

5. Verfahren nach einem der vorstehenden Ansprüche, wobei das Extrahieren des ersten Teils von Kupfer aus der flüssigen Phase im ersten Extraktionsschritt mit einem Hydroxyoximreagenz durchgeführt wird.

6. Verfahren nach einem der vorstehenden Ansprüche, wobei der zweite Extraktionsschritt bei einer Temperatur von 20 bis 60°C durchgeführt wird.

7. Verfahren nach einem der vorstehenden Ansprüche, wobei der zweite Extraktionsschritt bei einem pH-Wert von mindestens 2,0, typischerweise einem pH-Wert von mindestens 6,5, durchgeführt wird.

8. Verfahren nach einem der vorstehenden Ansprüche, wobei das Hydroxyoxim ausgewählt ist aus einer Gruppe, bestehend aus Aldoximen, Ketoximen und Gemischen davon.

9. Verfahren nach Anspruch 8, wobei das Aldoxim ausgewählt ist aus der Gruppe, bestehend aus 5-Nonylsalicylaldoxim und 5-Dodecylsalicylaldoxim.

10. Verfahren nach Anspruch 8, wobei das Ketoxim ausgewählt ist aus der Gruppe, bestehend aus 2-Hydroxy-5-nonylacetophenonoxim, 1-(5-Nonyl-2-hydroxyphenyl)(phenyl)ethan-1-onoxim und (5-Dodecyl-2-hydroxyphenyl)(phenyl)methanonoxim.

11. Verfahren nach einem der vorstehenden Ansprüche, wobei die Phosphinsäure ausgewählt ist aus Verbindungen mit einer allgemeinen Formel von R₂PO₂H, worin R eine organische Gruppe ist.

12. Verfahren nach einem der vorstehenden Ansprüche, wobei das Extraktionsmittel Di-2,4,4-trimethylpentylphosphinsäure und Hydroxyoxim, ausgewählt aus der Gruppe, bestehend aus Aldoximen oder einem Ketoxim(en) oder Gemischen davon, umfasst.

13. Verfahren nach Anspruch 12, wobei das Hydroxyoxim ausgewählt ist aus der Gruppe, bestehend aus 5-Nonylsalicylaldoxim, 5-Dodecylsalicylaldoxim, 2-Hydroxy-5-nonylacetophenonoxim, 1-(5-Nonyl-2-hydroxy-phenyl)(phenyl)ethan-1-onoxim und (5-Dodecyl-2-hydroxyphenyl)(phenyl)methanonoxim.

14. Verfahren nach einem der vorstehenden Ansprüche, wobei Kobalt aus der organischen Lösung in eine Kobaltelektrolytlösung bei einem pH-Wert im Bereich von 1,5 - 3,5 abgestreift wird.

15. Verfahren nach einem der vorstehenden Ansprüche, wobei Kupfer aus der organischen Lösung in eine Kupferelektrolytlösung bei einem pH-Wert von weniger als 1 entfernt wird.

## Revendications

1. Procédé de récupération de cuivre et de cobalt à partir d'un matériau de départ les comprenant, dans lequel le procédé comprend
a) lixivier dans une étape de lixiviation le matériau de départ dans une solution de lixiviation pour obtenir une suspension de lixiviation comprenant du cuivre, du cobalt, du fer et de l'aluminium,
b) optionnellement, soumettre la suspension de lixiviation à une première étape de séparation solide-liquide pour séparer un résidu de lixiviation solide d'une phase liquide,
c) extraire dans une première étape d'extraction une première partie de cuivre de la phase liquide pour obtenir un courant principal de cuivre et une phase liquide comprenant du fer, de l'aluminium, du cobalt et une seconde partie de cuivre,
d) mettre en contact dans une étape de précipitation la phase liquide comprenant du fer, de l'aluminium, du cobalt et la seconde partie de cuivre avec un agent de précipitation pour précipiter le fer, l'aluminium, le cobalt et la seconde partie de cuivre présente dans la phase liquide pour obtenir une suspension comprenant un précipité,
e) soumettre la suspension comprenant le précipité à une seconde étape de séparation solide-liquide pour séparer le précipité pour obtenir un précipité solide et une solution comprenant le cobalt restant et la seconde partie restante de cuivre, et optionnellement recycler le précipité séparé dans l'étape de lixiviation a),
f) extraire dans une seconde étape d'extraction le cobalt restant et la seconde partie restante de cuivre de la solution les comprenant, dans laquelle la solution est mise en contact avec un agent d'extraction comprenant une hydroxyoxime et un acide phosphinique pour obtenir une solution aqueuse et une solution organique, où la solution organique de cuivre est extraite dans l'hydroxyoxime et le cobalt est extrait dans l'acide phosphinique,
g) enlever le cobalt de la solution organique en une solution d'électrolyte au cobalt, et
h) enlever le cuivre de la solution organique en une solution d'électrolyte au cuivre.

2. Procédé selon la revendication 1, dans lequel la lixiviation est réalisée dans des conditions oxydantes obtenues en utilisant de l'acide sulfurique et un gaz contenant de l'oxygène.

3. Procédé selon l'une quelconque des revendications 1 ou 2, dans lequel la lixiviation est réalisée dans des conditions réductrices obtenues en utilisant un agent réducteur, tel que SO₂.

4. Procédé selon l'une quelconque des revendications précédentes, dans lequel la lixiviation comprend une pluralité de réacteurs, typiquement 2 à 7 réacteurs, et les composés de fer et d'aluminium séparés sont recyclés vers le dernier réacteur.

5. Procédé selon l'une quelconque des revendications précédentes, dans lequel l'extraction de la première partie de cuivre de la phase liquide dans la première étape d'extraction est effectuée par le réactif d'hydroxyoxime.

6. Procédé selon l'une quelconque des revendications précédentes, dans lequel, la seconde étape d'extraction est effectuée à une température de 20 à 60°C.

7. Procédé selon l'une quelconque des revendications précédentes, dans lequel la seconde étape d'extraction est réalisée à un pH d'au moins 2,0, typiquement à un pH d'au moins 6,5.

8. Procédé selon l'une quelconque des revendications précédentes, dans lequel l'hydroxyoxime est choisie dans un groupe constitué par les aldoximes, les cétoxymes et leurs mélanges.

9. Procédé selon la revendication 8, dans lequel l'aldoxime est choisie dans le groupe constitué par la 5-nonylsalicylaldoxime et la 5-dodécylsalicylaldoxime.

10. Procédé selon la revendication 8, dans lequel la cétoxime est choisie dans le groupe constitué par la 2-hydroxy-5-nonylacétophénone oxime, 1-(5-nonyl-2-hydroxyphényl)(phényl)éthan-1-oxime et la (5-dodécyl-2-hydroxyphényl)(phényl)méthanone oxime.

11. Procédé selon l'une quelconque des revendications précédentes, dans lequel l'acide phosphinique est choisi parmi les composés ayant la formule générale R₂PO₂H, dans laquelle R est un groupe organique.

12. Procédé selon l'une quelconque des revendications précédentes, dans lequel l'agent d'extraction comprend l'acide di-2,4,4-triméthylpentyl phosphinique et l'hydroxyoxime choisie dans le groupe constitué par les aldoximes ou les cétoxymes, ou leurs mélanges.

13. Procédé selon la revendication 12, dans lequel l'hydroxyoxime est choisie dans le groupe constitué par la 5-nonylsalicylaldoxime, la 5-dodécylsalicylaldoxime, la 2-hydroxy-5-nonylacétophénone oxime, la 1-(5-nonyl-2-hydroxyphényle)(phényl)éthan-1-one oxime et la (5-dodécyl-2-hydroxyphényl)(phényl)méthanone oxime.

14. Procédé selon l'une quelconque des revendications précédentes,
dans lequel le cobalt est retiré de la solution organique en une solution d'électrolyte au cobalt à un pH dans la plage de 1,5 à 3,5.

15. Procédé selon l'une quelconque des revendications précédentes, dans lequel du cuivre est retiré de la solution organique en une solution d'électrolyte au cuivre à un pH inférieur à 1.
